# EUROPÄISCHE PATENTSCHRIFT

(11) **EP 4 242 993 B1**
(45) Veröffentlichungstag und Bekanntmachung des Hinweises auf die Patenterteilung: **01.07.2026**
(21) Anmeldenummer: 23155295.1
(22) Anmeldetag: 07.02.2023
(51) Int. Cl.: G07D 7/2033

(54) **VERFAHREN ZUM BEREITSTELLEN EINES DRUCKPRODUKTS UND ZUGEHÖRIGEN AUTHENTIFIKATIONS-INFORMATIONEN UND VERFAHREN ZUM AUTHENTIFIZIEREN EINES DRUCKPRODUKTS**
METHOD FOR PROVIDING A PRINTED PRODUCT AND ASSOCIATED AUTHENTICATION INFORMATION AND METHOD FOR AUTHENTICATING A PRINTED PRODUCT
PROCÉDÉ DE FOURNITURE D'UN PRODUIT D'IMPRESSION ET D'INFORMATIONS D'AUTHENTIFICATION ASSOCIÉES ET PROCÉDÉ D'AUTHENTIFICATION D'UN PRODUIT D'IMPRESSION

(30) Priorität: 09.03.2022 DE 102022105489
(43) Veröffentlichungstag der Anmeldung: 13.09.2023
(73) Patentinhaber: Heidelberger Druckmaschinen AG, 69115 Heidelberg (DE)
(72) Erfinder: Schmitt-Lewen, Martin, 69118 Heidelberg (DE); Braig, Felix, 69117 Heidelberg (DE)

(56) Entgegenhaltungen:
- US-A1- 2018 361 778
- US-A1- 2019 384 955

## Beschreibung

### Erfindung

Die Erfindung betrifft ein Verfahren zum Bereitstellen eines rechentechnisch authentifizierbaren Druckprodukts und zugehörigen Authentifikations-Informationen gemäß Anspruch 1. Die Erfindung betrifft auch ein Verfahren zum rechentechnischen Authentifizieren eines entsprechend bereitgestellten Druckprodukts gemäß Anspruch 2.

### Gebiet der Technik

Die Erfindung liegt in dem technischen Gebiet der grafischen Industrie und dort insbesondere im Bereich des Herstellens von Druckprodukten, welche merkmalsbasiert identifizierbar (Nachweis der Individualität) und/oder authentifizierbar (Nachweis der Echtheit) sind, bevorzugt durch das drucktechnische Erzeugen oder das Applizieren von entsprechenden Merkmalen auf den Druckprodukten und das spätere Erfassen dieser Merkmale.

### Stand der Technik

Es ist bekannt, Druck- oder Verpackungsprodukte, wie z.B. Verpackungen hochwertiger Artikel, mit Sicherheitsmerkmalen zu versehen, die es erlauben, die Echtheit des Produkts zu überprüfen. Bekannte Maßnahmen sind z.B. aufgeklebte Hologramme, so genannte DataMatrix-Codes oder fluoreszierende Fasern im Substrat, welche detektiert und ausgewertet werden können. Solche Sicherheitsmerkmale können wiederum Teil eines kryptografischen Produktschutzes sein, indem z.B. Zufallsmuster des Sicherheitsmerkmals herstellerseitig erfasst, verschlüsselt und gespeichert und später nutzerseitig ebenfalls erfasst und entweder mit den gespeicherten und entschlüsselten Daten oder alternativ ebenfalls verschlüsselt und mit den verschlüsselten Daten verglichen werden. Da die zu schützenden Artikel oft Massenartikel mit Wegwerf-Verpackungen sind, besteht die Forderung, die Herstellung der Sicherheitsmerkmale als Massenprodukt und damit schnell und kostengünstig zu gestalten. Eine weitere Forderung kann darin bestehen, die Herstellung der Sicherheitsmerkmale in den Herstellungsprozess des Druck- und Verpackungsprodukts zu integrieren. Trotzdem soll eine hohe Verlässlichkeit bei der Erkennung von Fälschungen gewährt werden.

Die DE10304805A1 offenbart ein Verfahren zur Herstellung von Sicherheitskennzeichen, wobei ein Zufallsmuster erzeugt und kameratechnisch erfasst wird. Die WO2019011632A1 offenbart ein Verfahren zum Schützen eines Produktes gegen Fälschungen, wobei ebenfalls ein Zufallsmuster erzeugt und kameratechnisch erfasst wird. Zudem wird ein aus dem Zufallsmuster erzeugter Code auf dem Produkt angebracht. Die DE102020206060A1 offenbart ein ähnliches Verfahren, wobei beim Erfassen eine dynamische Maske zum Einsatz kommt. In den drei Dokumenten wird das jeweilige Zufallsmuster in einem Schritt hergestellt.

Die EP1745940B1 und die EP3708383A1 offenbaren jeweils Zwei-Schritt-Verfahren zur Herstellung von Sicherheitsmerkmalen, wobei zwei Schichten übereinander aufgetragen werden. Derart erzeugte Sicherheitsmerkmale zeigen in ihrer optischen Erscheinung eine Winkelabhängigkeit. Es ist nicht vorgesehen, das derart jeweils hergestellte Bild während oder direkt nach dem Herstellen kameratechnisch zu erfassen.

Die WO2020093080A1 offenbart ein Verfahren zur Herstellung eines Sicherheitsmerkmals. Dabei wird zur Herstellung eines Bildes ein Farbmittel auf ein Substrat aufgetragen und das Bild in Rasterflächen unterteilt, wobei sich unmittelbar benachbarte Rasterflächen des Bildes teilweise überlappen. Dabei kann ein Teil der Rasterflächen zum Beispiel mit einer Farbe und ein weiterer Teil der Rasterflächen mit einer anderen Farbe bedeckt sein. Es ist ebenfalls nicht vorgesehen, das derart hergestellte Bild während oder direkt nach dem Herstellen kameratechnisch zu erfassen.

In Dokument US 2019/384955 A1 wird ein Sicherheitselement beschrieben, das ein erstes und ein zweites Muster umfasst, die in oder auf einem Substrat ausgebildet sind, wobei das erste Muster durch diskrete Elemente aus einem ersten Material gebildet wird, die über einen ersten Bereich des Substrats verteilt sind, wobei das zweite Muster durch diskrete Elemente aus einem zweiten Material gebildet wird, die über einen zweiten Bereich des Substrats verteilt sind, wobei sich das zweite Material von dem ersten Material unterscheidet und sich der erste und der zweite Bereich des Substrats überlappen.

### Technische Aufgabe

Aufgaben der vorliegenden Erfindung sind darin zu sehen, Verbesserungen gegenüber dem Stand der Technik zu schaffen, welche es insbesondere ermöglichen, ein authentifizierbares Druckprodukt kostengünstig herzustellen und dieses sicher zu authentifizieren.

### Erfindungsgemäße Lösung der Aufgaben

Diese Aufgaben werden erfindungsgemäß durch die Verfahren nach Anspruch 1 und nach Anspruch 2 gelöst.

Vorteilhafte und daher bevorzugte Weiterbildungen der Erfindung ergeben sich aus den Unteransprüchen sowie aus der Beschreibung und den Zeichnungen.

Ein erfindungsgemäßes (Bereitstellungs-) Verfahren ist ein Verfahren zum Bereitstellen eines rechentechnisch authentifizierbaren Druckprodukts und zugehörigen Authentifikations-Informationen, gemäß Anspruch 1.

Ein erfindungsgemäßes (Authentifizierungs-) Verfahren ist ein Verfahren zum rechentechnischen Authentifizieren eines Druckprodukts, bereitgestellt nach einem erfindungsgemäßes (Bereitstellungs-) Verfahren, gemäß Anspruch 2 - wobei beim Berechnen oder beim Vergleichen Authentifikations-Informationen zum zweiten Teilbild zum Einsatz kommen.

### Vorteilhafte Ausbildungen und Wirkungen der Erfindung

Die Erfindungen ermöglichen es in vorteilhafter Weise, ein authentifizierbares Druckprodukt kostengünstig herzustellen und dieses sicher zu authentifizieren.

Das (Bereitstellungs-) Verfahren stellt erfindungsgemäß Informationen zum zweiten Teilbild bereit. Da das gedruckte zweite Teilbild allerdings mit dem zuvor gedruckten ersten Teilbild überlappt (wenigstens bereichsweise und bevorzugt als Ganzes) und dabei das Überlagerungsbild erzeugt, ist es kontraintuitiv, Informationen zum zweiten Teilbild bereitzustellen. Schließlich ist das zweite Teilbild als solches aufgrund der Überlagerung nicht ohne weiteres bzw. ungestört/unbeeinflusst vom darunter liegenden ersten Teilbild zu erfassen (wenigstens bereichsweise und bevorzugt als Ganzes). Daher ist erfindungsgemäß ein Schritt des Berechnens erforderlich. Die Erfindung geht also zur Erlangung verbesserter Sicherheit einen Weg, der zusätzlichen Aufwand bedeutet.

Das (Authentifizierungs-) Verfahren wiederum nutzt in vorteilhafter Weise zur Erlangung verbesserter Sicherheit die bereitgestellten Informationen zum zweiten Teilbild.

Sowohl für das erste Teilbild als auch für das zweite Teilbild können bevorzugt digitale Druckvorlagen bereitgestellt und verwendet werden.

Beide Teilbilder können bevorzugt gerastert, d. h. im Halbton-Druckverfahren, erzeugt werden. Beispiel: Beide Teilbilder können mit einem Tonwert zwischen ca. 30% und 70% Flächenanteil gerastert sein, z.B. mit einer Raster-Lineatur von 70 Linien/cm.

Die Erfindung kann für das kostengünstige Herstellen und sichere Authentifizieren unterschiedlicher Typen von Druckprodukten verwendet werden, z.B. Verpackungen, Etiketten, Produktanhänger, Lotterielose, Postwertzeichen, Steuermarken, Dokumente (etwa Zeugnisse oder Impfpässe), Formulare (etwa Wahlzettel), Ausweise, Pässe, Visa, Bankkarten, Kreditkarten, oder Banknoten.

### Weiterbildungen

Im Folgenden werden bevorzugte Weiterbildung der Erfindung (kurz: Weiterbildungen) beschrieben.

### Weiterbildungen des Bereitstellungsverfahrens

Eine Weiterbildung kann sich dadurch auszeichnen, dass das erste Teilbild und das zweite Teilbild mit verschiedenfarbigen Druckfarben oder Tinten gedruckt werden. Beispiel: erstes Teilbild in Cyan und zweites Teilbild in Magenta.

Eine Weiterbildung kann sich dadurch auszeichnen, dass das erste Teilbild und das zweite Teilbild mit gleichfarbigen Druckfarben oder Tinten gedruckt werden. Beispiel: beide Teilbilder in Cyan. Das Übereinanderdrucken der beiden Teilbilder mit gleichfarbiger Druckfarbe erhöht in vorteilhafter Weise die Sicherheit, da die beiden Teilbilder nicht ohne weiteres optisch separiert werden können.

Eine Weiterbildung kann sich dadurch auszeichnen, dass das erste Teilbild in einer Druckmaschine gedruckt wird.

Eine Weiterbildung kann sich dadurch auszeichnen, dass das zweite Teilbild in der Druckmaschine gedruckt wird.

Eine Weiterbildung kann sich dadurch auszeichnen, dass das erste Teilbild in der Druckmaschine erfasst wird.

Eine Weiterbildung kann sich dadurch auszeichnen, dass das zweite Teilbild in der Druckmaschine erfasst wird.

Eine Weiterbildung kann sich dadurch auszeichnen, dass das zweite Teilbild in einer weiteren Druckmaschine gedruckt wird.

Eine Weiterbildung kann sich dadurch auszeichnen, dass das zweite Teilbild in der weiteren Druckmaschine erfasst wird.

Eine Weiterbildung kann sich dadurch auszeichnen, dass das erste Teilbild außerhalb der Druckmaschine erfasst wird.

Eine Weiterbildung kann sich dadurch auszeichnen, dass das erste Teilbild außerhalb der weiteren Druckmaschine erfasst wird.

Die Druckmaschine und/oder die weitere Druckmaschine kann bevorzugt jeweils eine Offset-Druckmaschine oder eine Tintendruckmaschine sein.

Das Erfassen kann bevorzugt mit einer oder mehreren Kameras erfolgen. Es können z.B. etwa 5 mal 5 Millimeter große Flächenbereiche erfasst werden ("Kameraspot").

### Weiterbildungen des Bereitstellungs- und des Authentifizierungsverfahrens

Eine Weiterbildung kann sich dadurch auszeichnen, dass der erste Merkmalsvektor, der weitere erste Merkmalsvektor, der zweite Merkmalsvektor, der weitere zweite Merkmalsvektor, der gemeinsame Merkmalsvektor und/oder der weitere gemeinsame Merkmalsvektor jeweils eine Bitfolge der beiden Bits 0 und 1 darstellt.

Eine Weiterbildung kann sich dadurch auszeichnen, dass die jeweiligen Schritte des Vergleichens unter Beachtung einer jeweils vorgegebenen Toleranz für die Anzahl abweichender Bits in der Bitfolge der am Vergleich beteiligten Merkmalsvektoren erfolgen.

Die in den obigen Abschnitten Technisches Gebiet, Erfindung und Weiterbildungen sowie im folgenden Abschnitt Ausführungsbeispiele offenbarten Merkmale und Merkmalskombinationen stellen - in beliebiger Kombination miteinander - weitere vorteilhafte Weiterbildungen der Erfindung dar.

### Ausführungsbeispiele zur Erfindung und Figuren

Die Figuren zeigen bevorzugte Ausführungsbeispiele der Erfindung und der Weiterbildungen. Einander entsprechende Merkmale sind in den Figuren mit denselben Bezugszeichen versehen. Sich in den Figuren wiederholende Bezugszeichen wurden der Übersichtlichkeit teils weggelassen.
- Figur 1: Herstellen eines Druckprodukts mit einem Überlagerungsbild;
- Figur 2: Erfassen eines Überlagerungsbildes;
- Figur 3: Authentifizieren eines Druckprodukts mit einem Überlagerungsbild;
- Figur 4: Verfahrensablauf des Bereitstellens; und
- Figur 5: Verfahrensablauf des Authentifizierens.

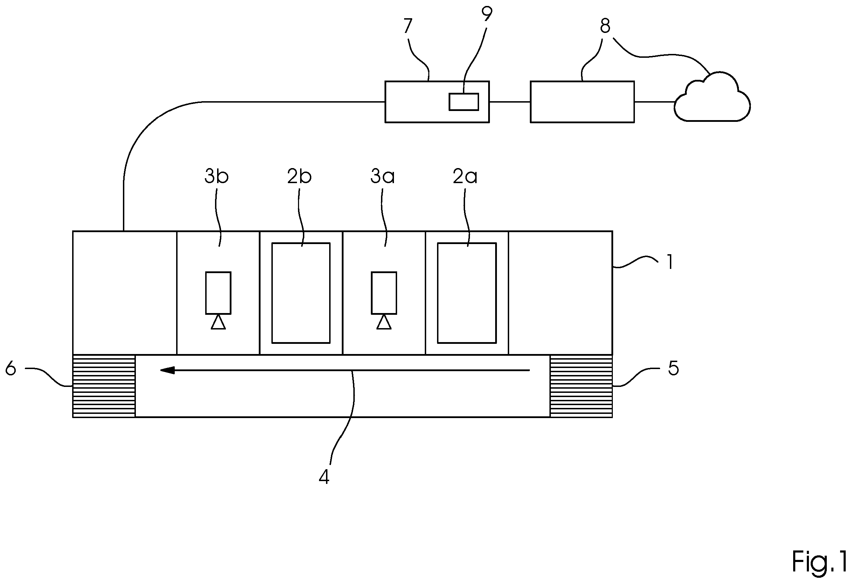

In Figur 1 ist eine Druckmaschine 1 dargestellt, bevorzugt eine Offsetdruckmaschine. Die Druckmaschine umfasst zwei Druckwerke 2a und 2b (und ggf. weitere Druckwerke) sowie zwei Kameras 3a und 3b; alle vier Komponenten sind nacheinander abwechselnd in Transportrichtung 4 angeordnet. Ein Bedruckstoff 5, bevorzugt Papierbogen, wird in Transportrichtung entlang der beiden Druckwerke und der beiden Kameras geführt. Der Bedruckstoff wird dabei zweimal bedruckt und zweimal wird das jeweils erzeugte Bild kameratechnisch optisch erfasst: Druckwerk 2a druckt ein erstes Teilbild; Druckwerk 2b ein zweites Teilbild. Kamera 3a erfasst das erste Teilbild; Kamera 3b ein Überlagerungsbild (und somit bevorzugt auch das zweite Teilbild). Es entsteht insgesamt ein Druckprodukt 6. Die Druckmaschine umfasst weiterhin einen Rechner 7 sowie einen dem Rechner zugeordneten Speicher 8, insbesondere ein Cloud-Speicher.

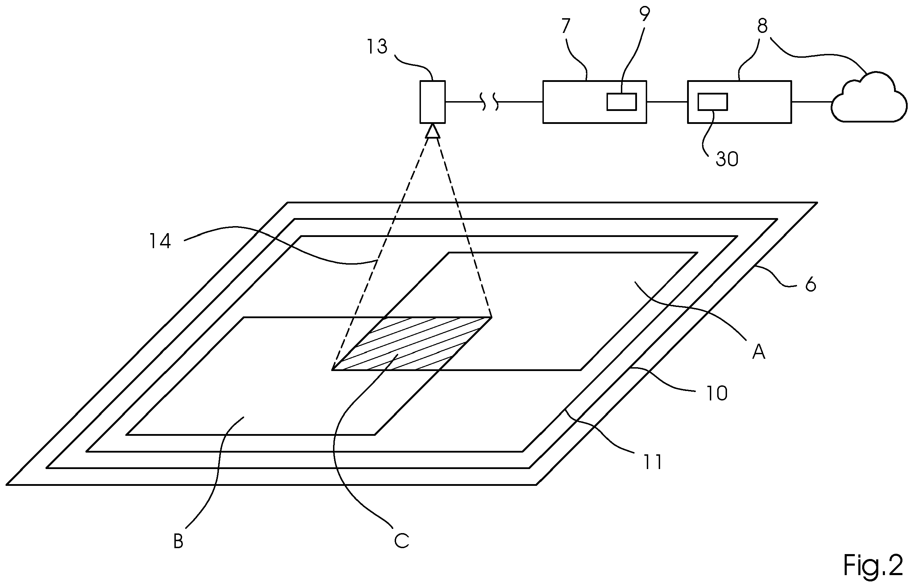

In Figur 2 ist dargestellt, wie das Überlagerungsbild C im Bereitstellung-Verfahren kameratechnisch erfasst wird. Auf dem Druckprodukt 6 ist ein Druckbereich 10 erkennbar. Im Druckbereich ist das Authentifikationsbild 11 bzw. dessen maximaler Bereich erkennbar. Das Authentifikationsbild umfasst das erste Teilbild A, das zweite Teilbild B sowie das Überlagerungsbild C im Bereich der Überlagerung 12 des ersten und des zweiten Teilbilds. Erkennbar ist auch eine Kamera 13 (entspricht Kamera 3b in Figur 1), welche einen Bereich 14 kameratechnisch erfasst ("Kameraspot"). Die Kamera steht mit dem Rechner 7 und somit auch mit dessen Speicher 8 in Verbindung. Der Bereich 14 ist wenigstens ein Teilbereich des Überlagerungsbildes C, bevorzugt das Überlagerungsbild C als Ganzes. Das von der Kamera erfasste Bild wird an den Rechner 7 übertragen. Der Rechner führt Berechnungsschritte, insbesondere eine Mustererkennung, aus und die dabei gewonnenen Daten, z.B. die Authentifikations-Informationen 30, werden auf dem zugeordneten Speicher 8 gespeichert und in der gespeicherten Fassung bereitgestellt.

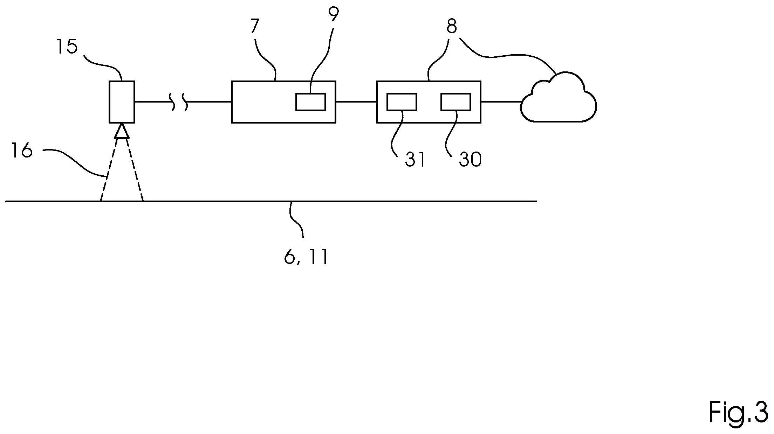

In Figur 3 ist dargestellt, wie das Überlagerungsbild im Authentifikations-Verfahren kameratechnisch erfasst wird. Ein Druckprodukt 6 bzw. Authentifikationsbild 11 (bevorzugt gemäß Figur 1 hergestellt und gemäß Figur 2 im Bereich des Überlagerungsbildes C erfasst) wird von einer Kamera 15 erfasst, bevorzugt zumindest der Überlagerungsbereich C des Authentifikationsbilds 11. Das von der Kamera in deren Kameraspot 16 erfasste Bild wird an den Rechner 7 oder einen anderen Rechner, welche mit dem Rechner 7 in Verbindung steht, übertragen. Der Rechner führt Berechnungsschritte, insbesondere eine Mustererkennung, aus und die dabei gewonnenen Daten, z.B. die Vergleichs-Informationen 31, werden mit den Daten, welche gemäß dem in Figur 2 gezeigten Vorgehen bereitgestellt wurden, z.B. die Authentifikations-Informationen 30, verglichen. Auf diese Weise kann das Druckprodukt 6 authentifiziert werden.

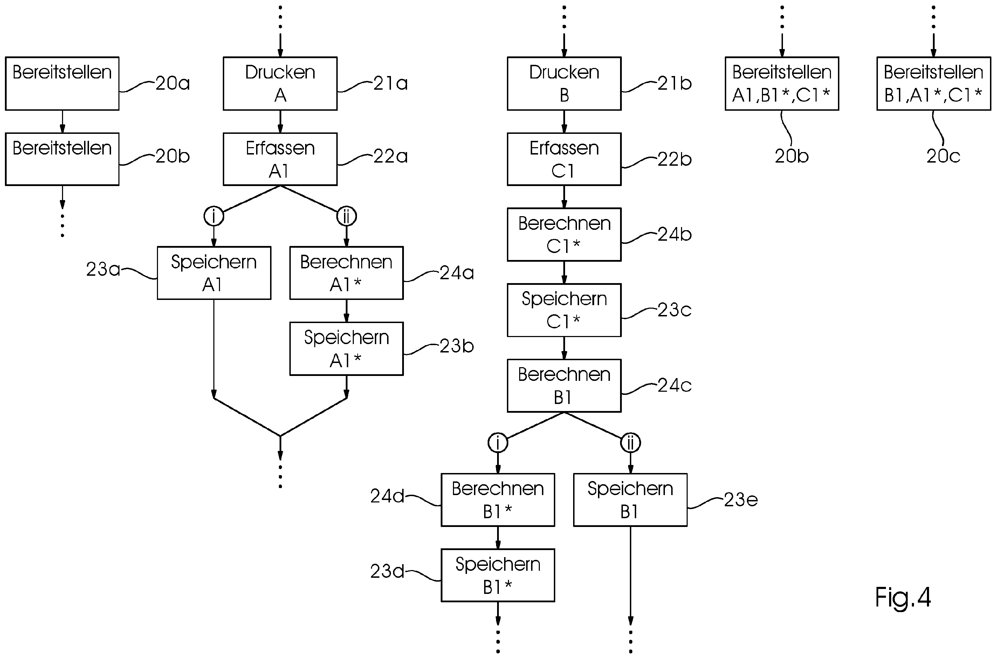

In Figur 4 ist ein bevorzugter Verfahrensablauf des Bereitstellens dargestellt, welcher folgende Schritte umfasst:
- Bereitstellen 20a einer Druckmaschine 1 mit zwei Druckwerken 2a, 2b und zwei Kameras 3a, 3b.
- Bereitstellen 20b einer Mustererkennung 9, insbesondere in Form eines digitalen Werkzeugs.
- Drucken 21a eines ersten Teilbildes A.
- Optisches Erfassen 22a des ersten Teilbildes A als ein - zu dem ersten Teilbild A korrespondierendes - erstes Digitalbild A1.
- Fall i) Speichern 23a des ersten Digitalbildes A1.
- Fall ii) Berechnen 24a eines ersten Merkmalsvektors A1* aus dem ersten Digitalbild A unter Anwendung der Mustererkennung 9.
- Fall ii) Speichern 23b des ersten Merkmalsvektors A1*.
- Drucken 21b eines zweiten Teilbilds B, wobei das zweite Teilbild B und das erste Teilbild A wenigstens in einem Bereich 12 überlagern und dort ein Überlagerungsbild C bilden.
- Optisches Erfassen 22b des Überlagerungsbilds C als ein - zu dem Überlagerungsbild C korrespondierendes - gemeinsames Digitalbild C1.
- Berechnen 24b eines gemeinsamen Merkmalsvektors C1* aus dem gemeinsamen Digitalbild C1 unter Anwendung der Mustererkennung 9.
- Speichern 23c des gemeinsamen Merkmalsvektors C1*.
- Berechnen 24c eines - zu dem zweiten Teilbild B korrespondierenden - zweiten Digitalbilds B1 aus dem ersten Digitalbild A1 und dem gemeinsamen Digitalbild C1.
- Fall i) Berechnen 24d eines zweiten Merkmalsvektors B1* aus dem zweiten Digitalbild B1 unter Anwendung der Mustererkennung 9.
- Fall i) Speichern 23d des zweiten Merkmalsvektors B1*.
- Fall ii) Speichern 23e des zweiten Digitalbilds B1.
- Fall i) Bereitstellen 20b des ersten Digitalbilds A1, des zweiten Merkmalsvektors B1* und des gemeinsamen Merkmalsvektors C1* als die Authentifikations-Informationen 30 (vgl. Bezugszeichen 30 in Figur 2).
- Fall ii) Bereitstellen 20c des zweiten Digitalbilds B1, des ersten Merkmalsvektors A1* und des gemeinsamen Merkmalsvektors C1* als die Authentifikations-Informationen 30 (vgl. Bezugszeichen 30 in Figur 2).

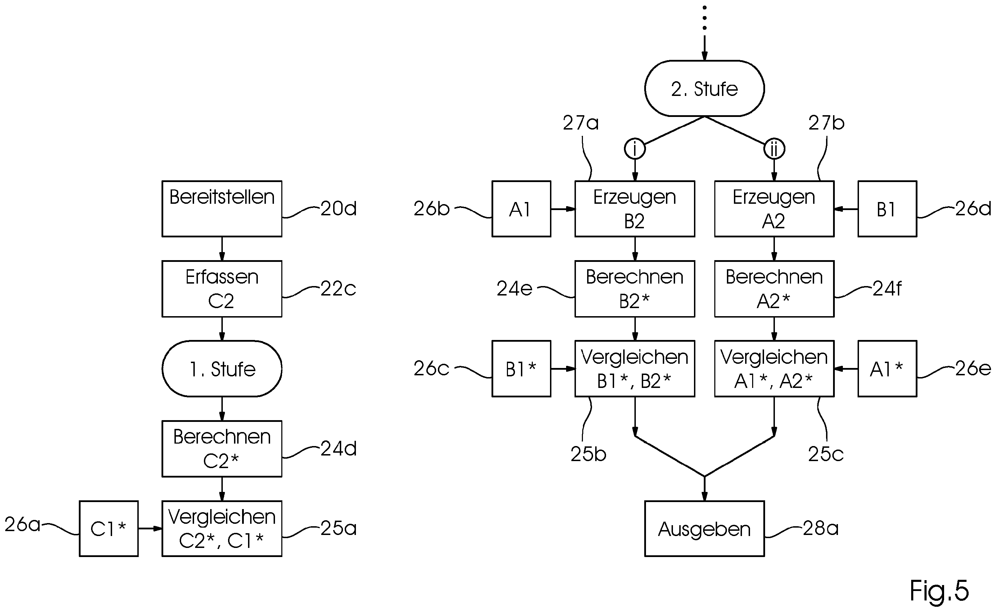

In Figur 5 ist ein bevorzugter Verfahrensablauf des Authentifizierens dargestellt, welcher folgende Schritte umfasst:
- Bereitstellen 20d einer Mustererkennung 9, insbesondere in Form eines digitalen Werkzeugs.
- Optisches Erfassen 22c des Überlagerungsbilds C als ein - zu dem Überlagerungsbild C korrespondierendes - weiteres gemeinsames Digitalbild C2.
- Erste Stufe (der Authentifizierung)
- Berechnen 24d eines weiteren gemeinsamen Merkmalsvektors C2* aus dem weiteren gemeinsamen Digitalbild C2 unter Anwendung der Mustererkennung 9.
- Vergleichen 25a des weiteren gemeinsamen Merkmalsvektors C2* mit dem bereitgestellten gemeinsamen Merkmalsvektor C1* (Schritt Bereitstellen 26a).
- Zweite Stufe (der Authentifizierung)
- Fall i) Erzeugen 27a eines weiteren zweiten Digitalbilds B2 aus dem weiteren gemeinsamen Digitalbild C2 und dem bereitgestellten ersten Digitalbild A1 (Schritt Bereitstellen 26b).
- Fall i) Berechnen 24e eines weiteren zweiten Merkmalsvektors B2* aus dem weiteren zweiten Digitalbild B2 unter Anwendung der Mustererkennung 9 (vgl. Bezugszeichen 31 in Figur 3).
- Fall i) Vergleichen 25b des weiteren zweiten Merkmalsvektors B2* mit dem bereitgestellten zweiten Merkmalsvektor B1* (Schritt Bereitstellen 26c).
- Fall ii) Erzeugen 27b eines weiteren ersten Digitalbildes A2 aus dem weiteren gemeinsamen Digitalbild C2 und dem bereitgestellten zweiten Digitalbild B1 (Schritt Bereitstellen 26d).
- Fall ii) Berechnen 24f eines weiteren ersten Merkmalsvektors A2* aus dem weiteren ersten Digitalbild A2 unter Anwendung der Mustererkennung 9 (vgl. Bezugszeichen 31 in Figur 3).
- Fall ii) Vergleichen 25c des weiteren ersten Merkmalsvektors A2* mit dem bereitgestellten ersten Merkmalsvektor A1* (Schritt Bereitstellen 26e).
- Ausgeben 28a einer Information über das (positive oder negative) Ergebnis der Authentifizierung.

### Bezugszeichenliste

- 1: Druckmaschine
- 2a, 2b: Druckwerk(e)
- 3a, 3b: Kamera(s)
- 4: Transportrichtung
- 5: Bedruckstoff
- 6: Druckprodukt
- 7: Rechner
- 8: Speicher, insbesondere Cloudspeicher
- 9: Mustererkennung

- 10: Druckbereich
- 11: Authentifikationsbild
- 12: Bereich der Überlagerung
- 13: Kamera
- 14: Kameraspot
- 15: Kamera
- 16: Kameraspot 16

- 20a-d: Bereitstellen
- 21a-b: Drucken
- 22a-c: Erfassen
- 23a-e: Speichern
- 24a-f: Berechnen
- 25a-c: Vergleichen
- 26a-e: Bereitstellen
- 27a-b: Erzeugen
- 28a: Ausgeben

- 30: Authentifikations-Informationen
- 31: Vergleichs-Informationen
- A: erstes Teilbild
- A1: erstes Digitalbild
- A1*: erster Merkmalsvektor
- A2: weiteres erstes Digitalbild
- A2*: weiterer erster Merkmalsvektor

- B: zweites Teilbild
- B1: zweites Digitalbild
- B1*: zweiter Merkmalsvektor
- B2: weiteres zweites Digitalbild
- B2*: weiterer zweiter Merkmalsvektor

- C: Überlagerungsbild
- C1: gemeinsames Digitalbild
- C1*: gemeinsamer Merkmalsvektor
- C2: weiteres gemeinsames Digitalbild
- C2*: weiterer gemeinsamer Merkmalsvektor

## Patentansprüche

1. Verfahren zum drucktechnischen Bereitstellen eines rechentechnisch authentifizierbaren Druckprodukts, wobei auf dem Druckprodukt ein Authentifikationsbild drucktechnisch erzeugt wird, das Authentifikationsbild optisch erfasst wird, aus dem Authentifikationsbild Authentifikations-Informationen rechentechnisch berechnet werden und sowohl das Druckprodukt drucktechnisch bereitgestellt als auch die Authentifikations-Informationen bereitgestellt werden,
wobei ein erstes Teilbild (A) gedruckt und als ein - zu dem ersten Teilbild (A) korrespondierendes - erstes Digitalbild (A1) optisch erfasst wird,
wobei in einem Fall i) das erste Digitalbild (A1) gespeichert wird oder wobei in einem Fall ii) aus dem ersten Digitalbild (A1) unter Anwendung einer in Form eines digitalen Werkzeugs rechentechnisch bereitgestellten Mustererkennung (9) ein erster Merkmalsvektor (A1*) rechentechnisch berechnet und dieser gespeichert wird,
wobei ein zweites Teilbild (B) gedruckt wird, wobei das zweite Teilbild (B) und das erste Teilbild (A) wenigstens in einem Bereich überlagern und dort ein Überlagerungsbild (C) bilden, und wobei das Überlagerungsbild (C) als ein - zu dem Überlagerungsbild (C) korrespondierendes - gemeinsames Digitalbild (C1) optisch erfasst wird,
wobei aus dem gemeinsamen Digitalbild (C1) unter Anwendung derselben Mustererkennung (9) ein gemeinsamer Merkmalsvektor (C1*) rechentechnisch berechnet wird und dieser gespeichert wird,
wobei aus dem ersten Digitalbild (A1) und dem gemeinsamen Digitalbild (C1) ein - zu dem zweiten Teilbild (B) korrespondierendes - zweites Digitalbild (B1) berechnet wird,
wobei im Fall i) aus dem zweiten Digitalbild (B1) unter Anwendung derselben Mustererkennung (9) ein zweiter Merkmalsvektor (B1*) rechentechnisch berechnet und dieser gespeichert wird oder wobei im Fall ii) das zweite Digitalbild (B1) gespeichert wird, und
wobei - als die Authentifikations-Informationen (30) - im Fall i) das erste Digitalbild (A1), der zweite Merkmalsvektor (B1*) und der gemeinsame Merkmalsvektor (C1*) oder im Fall ii) das zweite Digitalbild (B1), der erste Merkmalsvektor (A1*) und der gemeinsame Merkmalsvektor (C1*) bereitgestellt werden.

2. Verfahren zum rechentechnischen Authentifizieren eines Druckprodukts, welches nach Anspruch 1 drucktechnisch bereitgestellt ist, wobei ein bereitgestelltes Druckprodukt unter Verwendung von ebenfalls bereitgestellten Authentifikations-Informationen authentifiziert wird,
wobei das Überlagerungsbild (C) als ein - zu dem Überlagerungsbild (C) korrespondierendes - weiteres gemeinsames Digitalbild (C2) optisch erfasst wird,
wobei in einer ersten Stufe aus dem weiteren gemeinsamen Digitalbild (C2) unter Anwendung derselben, in Form eines digitalen Werkzeugs rechentechnisch bereitgestellten Mustererkennung (9) ein weiterer gemeinsamer Merkmalsvektor (C2*) rechentechnisch berechnet und mit dem rechentechnisch bereitgestellten gemeinsamen Merkmalsvektor (C1*) verglichen wird,
und wobei in einer zweiten Stufe in einem Fall i) aus dem weiteren gemeinsamen Digitalbild (C2) und dem rechentechnisch bereitgestellten ersten Digitalbild (A1) ein weiteres zweites Digitalbild (B2) rechentechnisch erzeugt wird und wobei aus dem weiteren zweiten Digitalbild (B2) unter Anwendung derselben, in Form eines digitalen Werkzeugs rechentechnisch bereitgestellten Mustererkennung (9) ein weiterer zweiter Merkmalsvektor (B2*) berechnet und mit dem rechentechnisch bereitgestellten zweiten Merkmalsvektor (B1*) rechentechnisch verglichen wird, und in einem Fall ii) aus dem weiteren gemeinsamen Digitalbild (C2) und dem rechentechnisch bereitgestellten zweiten Digitalbild (B1) ein weiteres erstes Digitalbild (A2) rechentechnisch erzeugt wird und wobei aus dem weiteren ersten Digitalbild (A2) unter Anwendung derselben Mustererkennung (9) ein weiterer erster Merkmalsvektor (A2*) rechentechnisch berechnet und mit dem bereitgestellten ersten Merkmalsvektor (A1*) rechentechnisch verglichen wird.

3. Verfahren nach Anspruch 2,
**dadurch gekennzeichnet,**
**dass** der erste Merkmalsvektor (A1*), der weitere erste Merkmalsvektor (A2*), der zweite Merkmalsvektor (B1*), der weitere zweite Merkmalsvektor (B2*), der gemeinsame Merkmalsvektor (C1*) und/oder der weitere gemeinsame Merkmalsvektor (C2*) jeweils eine Bitfolge der beiden Bits 0 und 1 darstellt.

4. Verfahren nach Anspruch 3
**dadurch gekennzeichnet,**
**dass** die jeweiligen Schritte des Vergleichens unter Beachtung einer jeweils vorgegebenen Toleranz für die Anzahl abweichender Bits in der Bitfolge der am Vergleich beteiligten Merkmalsvektoren (A1*, A2*, B1*, B2*, C1*, C2*) erfolgen.

## Claims

1. Method for providing a printed product which can be authenticated by computer technology,
wherein an authentication image is generated on the printed product by printing, the authentication image is optically detected, authentication information is calculated by computer technology from the authentication image and both the printed product is provided by printing and the authentication information is provided, wherein
a first partial image (A) is printed and optically captured as a first digital image (Al) corresponding to the first partial image (A), wherein
in a case i) the first digital image (Al) is stored or wherein
in a case ii) a first feature vector (Al*) is computationally calculated from the first digital image (Al) using a pattern recognition (9) computationally provided in the form of a digital tool and this is stored, wherein
a second partial image (B) is printed, wherein the second partial image (B) and the first partial image (A) are superimposed at least in one region and form a superimposed image (C) there, and wherein
the superimposed image (C) is optically detected as a common digital image (C1) corresponding to the superimposed image (C), wherein
a common feature vector (C1*) is computed from the common digital image (C1) using the same pattern recognition (9) and this is stored, wherein
a second digital image (B1) - corresponding to the second partial image (B) - is calculated from the first digital image (A1) and the common digital image (C1), wherein
in case i) a second feature vector (B1*) is computed from the second digital image (B1) using the same pattern recognition (9) and this is stored, or wherein
in case ii) the second digital image (B1) is stored, and wherein
- as the authentication information (30) - in case i) the first digital image (Al), the second feature vector (B1*) and the common feature vector (C1*) or in case ii) the second digital image (Bl), the first feature vector (Al*) and the common feature vector (C1*) are provided.

2. A method for computationally authenticating a printed product provided by printing according to claim 1, wherein a provided printed product is authenticated using authentication information also provided, wherein
the superimposed image (C) is optically detected as a further common digital image (C2) corresponding to the superimposed image (C), wherein
in a first stage, a further common feature vector (C2*) is computationally calculated from the further common digital image (C2) using the same pattern recognition (9) computationally provided in the form of a digital tool and compared with the computationally provided common feature vector (C1*), and wherein
in a second stage, in a case i) a further second digital image (B2) is generated computationally from the further common digital image (C2) and the first digital image (A1) provided computationally, and wherein
a further second feature vector (B2*) is computed from the further second digital image (B2) using the same pattern recognition (9) computationally provided in the form of a digital tool and compared computationally with the second feature vector (B1*) computationally provided, and in a case ii) a further first digital image (A2) is computationally generated from the further common digital image (C2) and the second digital image (B1) computationally provided, and wherein
a further first feature vector (A2*) is calculated computationally from the further first digital image (A2) using the same pattern recognition (9) and compared computationally with the first feature vector (Al*) provided.

3. Method according to claim 2,
**characterized in that**
the first feature vector (A1*), the further first feature vector (A2*), the second feature vector (Bl*), the further second feature vector (B2*), the common feature vector (CI*) and/or the further common feature vector (C2*) each represent a bit sequence of the two bits 0 and 1.

4. Method according to claim 3,
**characterized in that**
the respective steps of the comparison are carried out taking into account a predetermined tolerance for the number of deviating bits in the bit sequence of the feature vectors (Al*, A2*, Bl*, B2*, Cl*, C2*) involved in the comparison.

## Revendications

1. Procédé - pour la mise à disposition par technique d'impression d'un produit imprimé authentifiable par une technique de calcul, sachant qu'une image d'authentification est générée par technique d'impression sur le produit imprimé, que l'image d'authentification est détectée optiquement, que des informations d'authentification sont calculées par technique de calcul à partir de l'image d'authentification et que le produit imprimé est mis à disposition par technique d'impression, et que les informations d'authentification sont elles aussi mises à disposition - dans lequel
une première image partielle (A) est imprimée et détectée optiquement en tant que première image numérique (A1) correspondant à la première image partielle (A), sachant que dans un cas i) la première image numérique (A1) est enregistrée, ou sachant que dans un cas ii) est calculé par technique de calcul - à partir de la première image numérique (A1) en utilisant une reconnaissance de modèle (9) mise à disposition par calcul sous la forme d'un outil numérique - un premier vecteur de caractéristiques (Al*), et que ce vecteur est enregistré, sachant
qu'une deuxième image partielle (B) est imprimée, sachant que la deuxième image partielle (B) et la première image partielle (A) se superposent au moins dans une zone et y forment une image de superposition (C), et sachant que
l'image de superposition (C) est détectée optiquement sous la forme d'une image numérique commune (C1) correspondant à l'image de superposition (C), sachant qu'à partir de l'image numérique commune (C1) - en utilisant la même reconnaissance de modèle (9) - un vecteur de caractéristiques commun (C1*) est calculé par technique de calcul et que ce vecteur est enregistré, sachant
qu'est calculée, à partir de la première image numérique (A1) et de l'image numérique commune (C1), une deuxième image numérique (B1) correspondant à la deuxième image partielle (B), sachant que
dans le cas i) est calculé par technique de calcul - à partir de la deuxième image numérique (B1) en utilisant la même reconnaissance de modèle (9) - un deuxième vecteur de caractéristiques (B1*) et que ce vecteur est enregistré, ou sachant que
dans le cas ii), la deuxième image numérique (B1) est enregistrée, et sachant que sont fournis comme informations d'authentification (30), dans le cas i) : la première image numérique (Al), le deuxième vecteur de caractéristiques (B1*) et le vecteur de caractéristiques commun (C1*) ; ou, dans le cas ii) : la deuxième image numérique (B1), le premier vecteur de caractéristiques (A1*) et le vecteur de caractéristiques commun (C1*).

2. Procédé d'authentification par calcul technique d'un produit imprimé, produit qui est mis à disposition par technique d'impression selon la revendication 1, sachant qu'un produit imprimé mis à disposition est authentifié en utilisant des informations d'authentification également mises à disposition, sachant que
l'image de superposition (C) est détectée optiquement comme une autre image numérique commune (C2) correspondant à l'image de superposition (C), sachant qu'au cours d'une première étape, un autre vecteur de caractéristiques commun (C2*) est calculé par technique de calcul à partir de l'autre image numérique commune (C2) en utilisant la même reconnaissance de modèle (9) mise à disposition par technique de calcul sous la forme d'un outil numérique, et que ce vecteur est comparé au vecteur de caractéristiques commun (C1*) mis à disposition par technique de calcul, sachant
qu'au cours d'une deuxième étape, dans un cas i), à partir de l'autre image numérique commune (C2) et de la première image numérique (A1) mise à disposition par calcul, une autre deuxième image numérique (B2) est générée par calcul, et sachant
qu'à partir de l'autre deuxième image numérique (B2), en utilisant la même reconnaissance de modèle (9) fournie par calcul sous la forme d'un outil numérique, un autre deuxième vecteur de caractéristiques (B2*) est calculé et est comparé par calcul au deuxième vecteur de caractéristiques (B1*) fourni par calcul, et que, dans un cas ii), à partir de l'autre image numérique commune (C2) et de la deuxième image numérique (B1) fournie par le calcul, une autre première image numérique (A2) est générée par le calcul, et sachant qu'à partir de l'autre première image numérique (A2), en utilisant la même reconnaissance de modèle (9), un autre premier vecteur de caractéristiques (A2*) est calculé par technique de calcul et comparé par technique de calcul au premier vecteur de caractéristiques (A1*) mis à disposition.

3. Procédé selon la revendication 2,
**caractérisé en ce que**
le premier vecteur de caractéristiques (A1*), l'autre premier vecteur de caractéristiques (A2*), le deuxième vecteur de caractéristiques (B1*), l'autre deuxième vecteur de caractéristiques (B2*), le vecteur de caractéristiques commun (C1*) et/ou l'autre vecteur de caractéristiques commun (C2*) représentent chacun une suite de bits des deux bits 0 et 1.

4. Procédé selon la revendication 3,
**caractérisé en ce que**
les étapes respectives de la comparaison se déroulent en tenant compte d'une tolérance respectivement spécifiée pour le nombre de bits divergents dans la suite de bits des vecteurs de caractéristiques (A1*, A2*, B1*, B2*, C1*, C2*) participant à la comparaison.
